# EUROPEAN PATENT SPECIFICATION

(11) **EP 1 673 989 B1**
(45) Date of publication and mention of the grant of the patent: **15.08.2012**
(21) Application number: 05112061.6
(22) Date of filing: 13.12.2005
(51) Int. Cl.: A23P 1/16, A23G 3/00, A23G 3/02, A23G 9/20

(54) **Apparatus and method for treating food products**
Vorrichtung und Methode zur Behandlung von Lebensmitteln
Dispositif et procédé pour le traitement des denrées alimentaires

(30) Priority: 14.12.2004 IT PR20040091
(43) Date of publication of application: 28.06.2006
(73) Proprietor: Tonelli Group S.p.A., 43044 Collecchio (IT)
(72) Inventor: Melegari, Marco, 43100 Parma (IT)
(74) Representative: Gotra, Stefano

(56) References cited:
- EP-A- 0 448 503
- DE-A1- 2 402 940
- US-A- 2 197 919
- US-A- 2 538 716
- US-A- 4 747 272
- US-A- 5 151 288
- US-A- 5 201 861

## Description

The present invention relates to an apparatus comprising a heat exchanger with cylindrical geometry, having a stator and a rotor within the stator, defining a passage between the stator and the rotor and comprising cooling means that are operatively active on the outer surface of the stator; and pumping means, to push the food products through said passage.

The present invention also relates to a method for cooling and aerating substantially fluid or viscous food products, which provides for the use of a heat exchanger with cylindrical geometry, having a stator and a rotor within the stator and defining a passage between the stator and the rotor.

Within the food industry and, in particular, in the sweets sector, there is the need to treat food products, constituted by substantially liquid or viscous mixtures, e.g. mixes for snacks or stuffed pastries, creams, juices or jams. In particular, within the field of snack production, the food products constituted by creams or other fillings for the snacks are subjected to a hydration process, to increase their mass and improve product preservation. Said hydration is followed by a pasteurisation process, which entails a rise in the temperature of said food products. Subsequently, the same food products are subjected to an aeration process, to increase their volume and make them softer. Said aeration process essentially consists of the emulsion of a certain quantity of air or other fluid within the food products. For said emulsion to take place correctly and effectively, two conditions must be met: the products must be at a relatively low temperature (no higher than about 20°C, but the optimal temperature depends on the product) and they must be characterised by a substantially turbulent motion.

If the aforesaid conditions are not met, the emulsion takes place incorrectly, with consequent damage to the final product, both from the point of view of taste and from the point of view of appearance. Therefore, there is a need to rapidly lower the temperature of the treated food, at the end of the pasteurisation process, in order to perform the aeration process correctly.

In this light, technical solutions are known which allow to cool the food products at the end of the pasteurisation process. Moreover, technical solutions are known which allow to aerate said food products, after their cooling. With regard to cooling, the use is known of heat exchangers with scraping surface, as described for example in the patent documents US605646 or EP0503274. Said exchanger comprises a stator and a rotor with cylindrical geometry. The rotor rotates inside the stator and between the outer surface of the rotor and the inner surface of the stator there is a passage, into which the food products are thrust. The surface of the stator, lapped externally by a cooling fluid, exchanges heat with the food product that flows within it, cooling it. Moreover, said exchangers comprise scraping elements, able to prevent the food products from adhering to the inner surface of the stator, because of the temperature gradient. With regard to the aeration process, the separate use is known of emulsifiers, comprising a stator and a rotor with cylindrical geometry. In this case, too, the product to be treated is pushed into a passage between the rotor and the stator, together with a flow of air (or of another fluid). The rotor and the stator define, on the surfaces that face each other, a plurality of teeth which, in the rotating motion, mutually intersect, without scraping the surfaces that delimit the passage. In this way, the products to be treated are imparted a turbulent motion (within said passage), which favours the emulsion of air with the products.

The known solutions described above have numerous drawbacks. First of all, the presence of two distinct apparatuses, one to cool the pasteurised products and one to emulsify a fluid with the products themselves, limits compactness and increases the bulk of the apparatus, as a whole. Moreover, known emulsifiers are inconvenient to clean, since they have teeth both on the outer surface of the rotor and on the inner surface of the stator. Lastly, known apparatuses do not allow a continuous productive cycle, in which the products are cooled and emulsified, without idle times between one process and the other. It should be noted that different food products are characterised by different values of temperature whereat emulsion occurs optimally. In this light, the executing the cooling and aerating processes separately and at different times prevents a feedback control on the process as a whole.

From US-5201861 an apparatus for emulsifying air into food products is known, in which the amount of air to be injected is controlled by the pressure in the passage between the rotor and the stator. From US-4747272 an apparatus is known, in which the amount of air injected into a food product is controlled by a flow meter.

An object of the present invention is to eliminate the aforesaid drawbacks and to make available an apparatus for treating food products, which enables to effect cooling and aerating processes simultaneously and continuously on said food products.

Said objects are fully achieved by the apparatus and the method of the present invention, which are characterised by the content of the claims set out below. This and other characteristics shall become more readily apparent in the description that follows of a preferred embodiment, illustrated purely by way of non limiting example in the accompanying drawing tables, in which:
- Figure 1 schematically shows a lateral section view of an apparatus according to the present invention;
- Figure 2 schematically shows a frontal section view of the apparatus of Figure 1;
- Figure 3 shows the rotor of the apparatus of Figure 1.

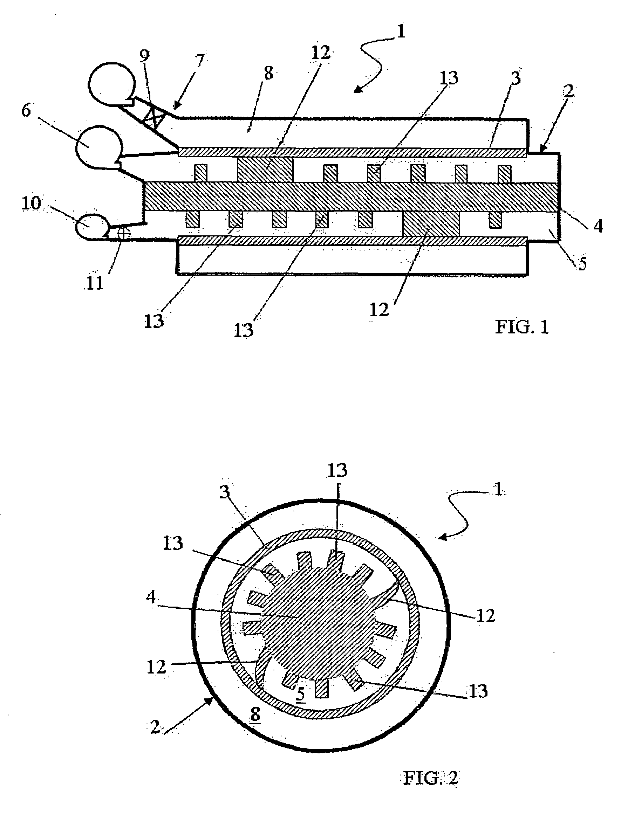

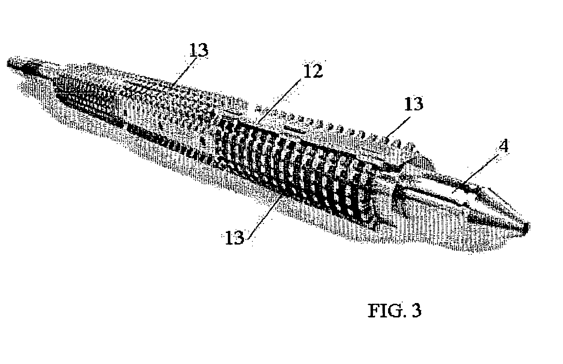

In Figure 1, the reference number 1 designates an apparatus according to the present invention. The reference number 2 indicates a heat exchanger with cylindrical geometry, comprising a stator 3 and a rotor 4. The rotor 4 is inside the stator 3 and coaxial thereto. Between the rotor 4 and the stator 3 the exchanger 2 defines a passage 5, into which are introduced the food products to be treated. In particular, the products are thrust through the passage 5 by pumping means 6, of a substantially known kind. The rotor is set in rotation by a rotor, preferably electric, e.g. an asynchronous motor with four poles driven by an inverter, not shown in the figure. Externally to the stator 3 act cooling means 7, comprising a conduit 8 adjacent to the stator in which a cooling fluid, preferably but not necessarily constituted by water with glycol, is made to circulate. Said cooling means are able to deliver a flow rate of cooling fluid of up to 3000 l/h and they comprise insulated connecting pipes, possibly provided with bypass means. The surfaces that define the passage 5 are preferably made of stainless steel and can operate at pressures of about 25 bar. Moreover, said cooling means comprise a modulating valve 9, which allows to vary the flow rate of cooling fluid. It should be noted that the conduit 8 is hermetically isolated from the passage 5, so that the cooling fluid can in no way come in contact with the food products present in the passage 5. The maximum pressure at which the cooling conduit 8 can operate is about 10 bar. The apparatus 1 also comprises means 10 for injecting a fluid into the passage 5, so it is emulsified with the food products. This fluid is preferably, but not necessarily, constituted by air. Said injection means 10 comprise, in a preferred embodiment, a stainless steel box (not show) which acts as a buffer and is fastened to a frame (not shown) which supports the whole apparatus. The number 11 designates an automatic flow meter, i.e. a device able automatically to measure the flow rate of fluid injected into the passage 5 to be emulsified. The apparatus 1 comprises control means, not shown, able to regulate the flow rate of the fluid injected into the passage 5; said control means being operatively connected to said flow meter. In the figures, the reference number 12 designates scraping elements, associated to the rotor 4 and having a surface that, during the operation of the apparatus 1, is in substantial sliding contact with the inner surface of the stator 3, which is smooth, to prevent the food products in contact with said surface from adhering thereon by effect of the temperature gradient. Said scraping elements 12 are constituted, in a preferred but not exclusive embodiment, by fins movably associated to the rotor 4 in such a way as to be able to rotate from a first position in which they are not in contact with the stator 4 (position shown in Figure 3) to a second position in which they are in contact with the stator 3 (position shown schematically in Figures 1 and 2). The scraping elements 12 move from the first to the second position by effect of the centrifugal force due to the rotation of the rotor 3. Said scraping elements 12 are made of bacteriologically inert material, preferably constituted by an odourless, non toxic synthetic resin, not containing additional glass fibres or any other additive. Moreover, the scraping elements 12 are preferably removable manually and easily replaceable. The apparatus 1 also comprises means for moving the food products inside the passage 5. Said moving means comprise, in a preferred embodiment, a plurality of teeth 13, integral with the rotor 4. Said teeth 13 substantially consist of projections that occupy a portion of the passage 5, without interfering with the inner surface of the stator 3. Said moving means, actuated by the movement of the rotor 4, cause the food products inside the passage 5 to be subjected to a turbulent motion, with consequent benefit from the viewpoint of the emulsification of the injected fluid. The apparatus 1 also comprises a temperature probe, of a substantially known kind and not shown in the figures, able to detect a temperature of the products inside the passage 5. Said temperature probe is operatively connected to a control board (not shown), which actuates the modulating valve 9 to regulate the temperature of the food products inside the passage 5. Therefore, originally, a feedback control is obtained on the temperature at which the emulsification process takes place, acting on the cooling means 7. Moreover, the described apparatus is particularly easy to wash, also automatically, thanks to the fact that the stator 3 is internally smooth. Moreover, the apparatus 1 originally enables to treat food products by cooling them and simultaneously aerating them, minimising the bulk of the apparatus, because both an exchanger and an emulsifier, not distinct from each other, are obtained in a single section. The present invention also makes available a method for cooling and aerating food products. Said method provides for the use of a heat exchanger 2 with cylindrical geometry, preferably of the type of scraping surface, substantially known. Said exchanger comprises a stator and a rotor internal to the stator and it defines a passage 5 between the stator and the rotor. Said method comprises the following steps:
- pumping the food products through the passage 5;
- injecting air into the passage 5;
- moving the food products inside the passage 5, in such a way as to cause a turbulent motion and the emulsion of the air with the products.

Said method further comprises a step of regulating the flow rate of the air injected into said passage 5. It also comprises a step of regulating the temperature of the food products inside the passage 5. Said regulating step in turn comprises a step of measuring the temperature of the food products in the passage and a processing step, by means of an appropriate software active on a control board. Moreover, said method comprises a step of washing step of the passage 5, which in turn comprises the following steps:
- cold roughing with water to be disposed of, for about 10 minutes;
- washing with detergent fluid to be recirculated, for about 20 minutes at the temperature of 70°C;
- rinsing with water to be disposed of.

Said method originally enables to effect a process of aeration and cooling of food products simultaneously and continuously. In this way, the aeration process can be optimised for each type of food product, originally operating a double regulation, with feedback, of the process temperature and of the injected flow rate of fluid to be emulsified.

## Claims

1. An apparatus (1) for treating food products, having:
- a heat exchanger (2) with cylindrical geometry, having a stator (3) and a rotor (4) internal to the stator (3), defining a passage (5) between the stator and the rotor and comprising cooling means (7) operatively active on the outer surface of the stator (3) and comprising a cooling fluid and means for making said cooling fluid circulate in a conduit (8) adjacent to the stator (3);
- pumping means (6), for thrusting the food products through said passage (5);
- means (10) for injecting a fluid into said passage (5);
- means for handling food products, to produce the emulsion of the fluid with the food products by means of a substantially turbulent motion of said products within said passage (5), **characterised in that** the cooling means (7) comprise a modulating valve (9), actuated by a control board operatively connected to a temperature probe for measuring and regulating the temperature of the products inside the passage (5) and **in that** the apparatus comprises an automatic flow meter (11), connected to the means (10) for injecting the fluid to be emulsified inside the passage (5) to measure its flow rate, and control means, operatively connected to said flow meter (11) to regulate the flow rate of the fluid injected inside the passage (5).

2. Apparatus as claimed in claim 1, wherein said cooling fluid comprises water with glycol.

3. Apparatus as claimed in claim 1, wherein said passage (5) is inaccessible to the cooling fluid.

4. Apparatus as claimed in claim 1, wherein the rotor (4) comprises scraping elements (12) constituted by fins movably associated to the rotor (4) in such a way as to be able to rotate, by effect of centrifugal force, from a first position in which they are not in contact with the stator (4) to a second position in which they are in contact with the stator (3).

5. Method for cooling and aerating substantially fluid or viscous food products, which provides for the use of a heat exchanger (2) with cylindrical geometry, having a stator (3) and a rotor (4) within the stator and defining a passage (5) between the stator and the rotor,
**characterised in that** it comprises the following steps:
- pumping the food products through said passage;
- injecting air into said passage;
- moving the food products inside said passage, in such a way as to cause a turbulent motion and the emulsion of the air with the products:
- automatically measuring and regulating the flow rate of the air injected inside said passage;
- measuring and regulating the temperature of the food products inside said passage;
- washing said passage through rough cleaning with water to be disposed of;
- washing with detergent fluid to be recirculated;
- rinsing with water to be disposed of.

6. Plant for treating food products, comprising a plurality of apparatus of the kind claimed in any one of the claims 1 through 3, mutually connected in series or in parallel.

## Patentansprüche

1. Vorrichtung (1) zur Behandlung von Lebensmitteln, aufweisend:
- einen Wärmetauscher (2) mit zylindrischer Geometrie, aufweisend einen Stator (3) und einen Rotor (4) im Stator (3), definierend einen Durchgang (5) zwischen dem Stator und dem Rotor und umfassend Kühlmittel (7), die betriebsbereit an der äußeren Oberfläche des Stators (3) aktiv sind; und umfassend eine Kühlflüssigkeit und Mittel, um die Zirkulation dieser Kühlflüssigkeit in einer Leitung (8), angrenzend an den Stator (3), zu veranlassen;
- Pumpmittel (6), um die Lebensmittel durch diesen Durchgang (5) zu drücken;
- Mittel (10), um ein Fluid in diesen Durchgang (5) zu injizieren;
- Mittel zum Handling von Lebensmitteln, um die Emulsion des Fluids mit den Lebensmitteln mittels einer im Wesentlichen als Wirbel erfolgenden Bewegung der Produkte im Durchgang (5) zu erzeugen, **dadurch gekennzeichnet, dass** die Kühlmittel (7) ein Modulationsventil (9) umfassen, betätigt durch eine Bedientafel, die betriebsbereit an einen Temperaturfühler angeschlossen ist, um die Temperatur der Produkte im Durchgang (5) zu regeln und dadurch, dass die Vorrichtung einen automatischen Durchflussmesser (11) umfasst, verbunden mit den Mitteln (10) zum Injizieren des Fluids, das im Durchgang (5) emulsioniert wird, um dessen Durchflussmenge zu messen, sowie Kontrollmittel, die betriebsbereit mit dem Durchflussmesser (11) verbunden sind, um die Durchflussmenge des in den Durchgang (5) injizierten Fluids zu regeln.

2. Vorrichtung nach Anspruch 1, wobei die Kühlflüssigkeit Wasser mit Glykol umfasst.

3. Vorrichtung nach Anspruch 1, wobei der Durchgang (5) für die Kühlflüssigkeit nicht zugänglich ist.

4. Vorrichtung nach Anspruch 1, wobei der Rotor (4) Schabelemente (12) umfasst, bestehend aus Lamellen, bewegbar mit dem Rotor (4) so verbunden, dass sich diese durch die Wirkung von Zentrifugalkraft von einer ersten Position, in der sie nicht mit dem Stator (4) in Kontakt sind, in eine zweite Position, in der sie mit dem Stator (3) in Kontakt sind, drehen können.

5. Verfahren zum Kühlen und Belüften von im Wesentlichen flüssigen oder viskosen Lebensmitteln, das für die Verwendung eines Wärmetauschers (2) mit zylindrischer Geometrie sorgt, aufweisend einen Stator (3) und einen Rotor (4) im Stator und definierend einen Durchgang (5) zwischen dem Stator und dem Rotor, **dadurch gekennzeichnet, dass** es die folgenden Phasen umfasst:
- Pumpen der Lebensmittel durch den Durchgang;
- Injizieren von Luft in den Durchgang;
- Bewegen der Lebensmittel in den Durchgang, sodass eine Wirbelbewegung und die Emulsion der Luft mit den Produkten erzeugt werden;
- automatisches Messen und Regulieren der Durchflussmenge der Luft, die in den Durchgang injiziert wird;
- Messen und Regulieren der Temperatur der Lebensmittel im Durchgang;
- Waschen des Durchgangs anhand einer Vorreinigung mit zu entsorgendem Wasser;
- Waschen mit Reinigungsflüssigkeit, die wieder in Umlauf zu bringen ist;
- Spülen mit zu entsorgendem Wasser.

6. Anlage zur Behandlung von Lebensmitteln, umfassend mehrere Vorrichtungen in der Art gemäß einem der Ansprüche 1 bis 3, in Reihe oder parallel miteinander verbunden.

## Revendications

1. Dispositif (1) pour le traitement des denrées alimentaires, avec:
- un échangeur de chaleur (2) à géométrie cylindrique, ayant un stator (3) et un rotor (4) interne au stator (3), définissant un passage (5) entre le stator et le rotor et comportant des moyens de refroidissement (7) opérationnellement actifs sur la surface externe du stator (3), et comprenant un fluide de refroidissement et des moyens pour faire circuler ledit fluide de refroidissement dans un conduit (8) adjacent au stator (3) ;
- des moyens de pompage (6), pour pousser les denrées alimentaires dans ledit passage (5);
- des moyens (10) pour injecter un fluide à l'intérieur dudit passage (5);
- des moyens pour déplacer des denrées alimentaires, pour entraîner l'émulsion du fluide avec les denrées alimentaires au moyen d'un mouvement essentiellement turbulent desdites denrées à l'intérieur dudit passage (5), **caractérisé en ce que** les moyens de refroidissement (7) comprennent une vanne modulante (9), pilotée par un tableau de commande opérationnellement relié à une sonde de température pour mesurer et régler la température des denrées à l'intérieur du passage (5) et **en ce que** le dispositif comprend un débitmètre automatique (11), relié aux moyens (10) pour injecter le fluide à émulsionner à l'intérieur du passage (5) pour mesurer son débit, et des moyens de commande, opérationnellement reliés audit débitmètre (11) pour régler le débit du fluide injecté à l'intérieur du passage (5).

2. Dispositif selon la revendication 1, dans lequel ledit fluide de refroidissement comprend de l'eau avec glycol.

3. Dispositif selon la revendication 1, dans lequel le fluide de refroidissement n'a pas accès audit passage (5).

4. Dispositif selon la revendication 1, dans lequel le rotor (4) comprend des éléments de frottement (12) composés d'ailettes associées de manière mobile au rotor (4), de sorte à pouvoir tourner, sous l'effet de la force centrifuge, d'une première position dans laquelle elles ne sont pas en contact avec le stator, (4) à une seconde position dans laquelle elles sont en contact avec le stator (3).

5. Procédé pour le refroidissement et l'aération des denrées alimentaires essentiellement fluides ou visqueuses, qui prévoit l'utilisation d'un échangeur de chaleur (2) à géométrie cylindrique, ayant un stator (3) et un rotor (4) à l'intérieur du stator et définissant un passage (5) entre le stator et le rotor, **caractérisé en ce qu'**il comprend les étapes suivantes :
- pomper les denrées alimentaires dans ledit passage ;
- injecter de l'air dans ledit passage;
- déplacer les denrées alimentaires à l'intérieur dudit passage, de sorte à provoquer un mouvement turbulent et l'émulsion de l'air avec les denrées;
- mesurer et régler automatiquement le débit de l'air injecté à l'intérieur dudit passage;
- mesurer et régler la température des denrées alimentaires à l'intérieur dudit passage;
- laver ledit passage par un lavage grossier à eau perdue;
- laver avec un fluide détergent en recirculation;
- rincer avec de l'eau perdue.

6. Système pour le traitement des denrées alimentaires, comprenant une pluralité de dispositifs du genre décrit dans l'une quelconque des revendications 1 à 3, réciproquement raccordés en série ou en parallèle.
